# EUROPÄISCHE PATENTSCHRIFT

(11) **EP 1 877 308 B1**
(45) Veröffentlichungstag und Bekanntmachung des Hinweises auf die Patenterteilung: **01.12.2010**
(21) Anmeldenummer: 06706952.6
(22) Anmeldetag: 15.02.2006
(51) Int. Cl.: B64D 9/00, B60P 1/50, B65G 13/02

(54) **FRACHTLADESYSTEM**
FREIGHT LOADING SYSTEM
SYSTEME DE CHARGEMENT DE FRET

(30) Priorität: 06.05.2005 DE 102005021078
(43) Veröffentlichungstag der Anmeldung: 16.01.2008
(73) Patentinhaber: Rheinmetall Defence Electronics GmbH, 28309 Bremen (DE)
(72) Erfinder: KRANZ, Willi, 27576 Bremerhaven (DE)
(74) Vertreter: Thul, Hermann
(86) Internationale Anmeldenummer: PCT/EP2006/001348
(87) Internationale Veröffentlichungsnummer: WO 2006/119811

(56) Entgegenhaltungen:
- EP-A- 1 203 716
- DE-C1- 10 158 298
- US-A- 4 050 655
- US-B1- 6 622 846

## Beschreibung

### Technisches Gebiet

Die Erfindung bezieht sich auf ein Frachtladesystem nach dem Oberbegriff des Anspruchs 1.

### Stand der Technik

Beim Be- und Entladen eines Frachtraumes eines Transportmittels ergibt sich oftmals die Notwendigkeit, ein Frachtstück, beispielsweise in Form einer Palette oder eines Containers, zu drehen, um den zur Verfügung stehenden Laderaum optimal auszunutzen. So gibt es beispielsweise Flugzeuge, deren Ladeluke seitlich am Flugzeugrumpf angeordnet ist, wobei die Größe der Frachtraumtür die Ausmaße der kleinsten Seitenfläche des größtmöglichen Frachtstücks nur unwesentlich übersteigt. Insbesondere wenn der Frachtraum nicht über seine gesamte Länge gleichbleibend breit ist, was zum Beispiel oftmals bei Flugzeugen der Fall ist, bei denen sich der Frachtraum im Bereich des Fahrwerks verjüngt, ist daher eine Drehung der Frachtstücke notwendig. Die Drehung der Frachtstücke erfolgt dabei in der Ebene der Ladefläche, also um eine Achse (Hochachse), die senkrecht auf der Ladefläche steht.

Die Patentschrift DE 31 02 146 C2 offenbart beispielsweise eine Anordnung zum zwangsweisen Umlenken von Frachtpaletten bzw. Containern. Dazu ist im Bereich der Frachtraumtür eines Flugzeugs ein Schwenkzapfen angeordnet, der in einen Beschlag eingreift, welcher ausklappbar an der Palette bzw. dem Container angebracht ist. Der Nachteil dieser Anordnung ist, dass jedes zu drehende Frachtstück mit einem zusätzlichen Beschlag versehen sein muß. Dies ist einerseits mit finanziellem und technischem Aufwand verbunden und erhöht andererseits das Transportgovdcht.

In der Patentschrift US 4,050,655 erfolgt eine Drehung des Frachtstücks, indem es von Förderwalzen gegen einen Anschlagpunkt gedrückt wird, der sich im Bereich der Frachtraumtür befindet. Dabei sind die Walzenförderer in der Ebene der Ladefläche drehbar und werden je nach Betriebsmodus unterschiedlich ausgerichtet. Derartige Walzenförderer welsen jedoch die Nachteile auf, dass sie gegenüber nicht drehbaren Walzenförderern schwerer, teurer und wartungsintensiver sind.

Das Dokument DE 101 58 298 C1 offenbart ein Frachtladesystem mit Drehfunktionalität, bei dem zum Drehen eines Frachtstücks einige der vorhandenen Walzenförderer mit fest ausgerichteter Förderrichtung verwendet werden. Die Drehung wird in mindestens zwei Phasen durchgeführt, wobei die Menge der aktivierten Walzenförderer sowie deren Fördergeschwindigikeit in jeder Phase unterschiedlich ist. Das System nach diesem Dokument setzt jedoch zwingend Walzenförderer mit variabler Fördergeschwindigkeit voraus und erfordert eine aufwändige Steuerung inklusive der Detektion der Umschaltzeitpunkte zwischen zwei Drehphasen.

### Darstellung der Erfindung

Es ist daher die Aufgabe der vorliegenden Erfindung, ein verbessertes Frachtladesystem bereitzustellen, welches die vorgenannten Nachteile des standes der Technik nicht aufweist.

Diese Aufgabe wird durch die kennzeichnenden Merkmale des Anspruchs 1 gelöst.

Die Flurförderelemente verfügen über eine fest ausgerichtete bidirektionale Förderfähigkeit, was bedeutet, dass sie in zwei entgegengesetzte Richtungen fördern können, wobei zwischen den Förderrichtungen umgeschaltet werden kann. Die Gerade, entlang derer ein Flurförderelement fördern kann, wird mit dessen Einbau festgelegt und ist im Betrieb nicht veränderbar, das Flurförderelement ist also fest aufgerichtet.

Bestehende Frachtladesysteme weisen üblicherweise Flurförderelemente der vorstehend genannten Art in Form sogenannter PDUs (Power Drive Units) auf. Dies sind kurze, angetriebene Förderrollen mit fest ausgerichteter Rotationsachse.

Üblicherweise sind die PDUs in einem Laderaum derart angeordnet, dass ihre Förderrichtungen orthogonal zueinander stehen, wobei diese meistens in Längs- und Querrichtung des Laderaums orientiert sind, um ein Frachtstück längs oder quer auf der Ladefläche verfahren zu können. Oftmals sind PDUs absenkbar ausgestaltet, um eine Bewegung des Frachtstücks in eine andere als die Förderrichtung der PDU nicht zu hemmen.

Gemäß der Erfindung werden einige dieser fest ausgerichteten PDUs zur Drehung eines Frachtstückes verwendet Dabei ist in der Steuereinheit, mittels der die PDUs angesteuert werden, ein weiterer Betriebsmodus für die Drehfunktionalität eingerichtet. Dazu ist in der Steuereinheit hinterlegt, welche PDUs für die jeweilige Drehrichtung des Frachtstücks aktiviert werden und in welche Richtung die einzelnen PDUs fördern. Die PDUs, die zur Drehung des Frachtstücks aktiviert werden, sind im Wesentlichen auf einer gekrümmten Bahn angeordnet Damit wird die Trajektorie des zu drehenden Frachtstücks nachgebildet. In vorteilhafter Weise werden diejenigen Flurförderelemente zum Drehen des Frachtstücks aktiviert, deren Förderrichtungen möglichst tangential an der gekrümmten Bahn anliegen. Bevorzugt umfasst die Angabe "im Wesentlichen entlang einer gekrümmten Bahn" nicht nur diejenigen Flurförderelemente, die exakt oder annähernd auf dieser gekrümmten Bahn liegen, sondern auch oder alternativ deren benachbarte Flurförderelemente, die die gleiche Förderrichtung aufweisen.

Das Frachtladesystem weist einen Anschlagpunkt auf, um den die Drehung des Frachtstücks erfolgt. Bei diesem Anschlagpunkt kann es sich beispielsweise um eine Kante der Frachtraumtür oder eine separate Vorrichtung handeln.

Ein Vorteil des erfindungsgemäßen Frachtladesystems ist die Tatsache, dass sich die Drehfunktionalität durch nur geringe Eingriffe in ein bestehendes Frachtladesystem realisieren läßt. Bestehende Frachtladesysteme verfügen üblicherweise über fest ausgerichtete Flurförderelemente zum Bewegen von Frachtstücken in Längs- und Querrichtung. Die Erfindung realisiert die Drehfunktion durch gezieltes Ansteuern einiger der vorhandenen Flurförderelemente. Die Verwendung zusätzlicher oder modifizierter Flurförderelemente ist nicht notwendig. Außerdem wird die Verzögerung vermieden, die entsteht, wenn die Flurförderelemente neu ausgerichtet werden.

Zur Bedienung von Frachtladesystemen werden üblicherweise Bedienkonsolen verwendet, die mit unterschiedlichen Bedienelementen ausgestattet sind, um die verschiedenen Funktionalitäten zu nutzen. So wird beispielsweise ein Frachtstück häufig mittels eines Joysticks navigiert. Weiterhin kann eine Bedienkonsole Anzeigevorrichtungen aufweisen, zum Beispiel zur Anzeige des Systemstatus. Derartige Bedienkonsolen sind entweder ortsfest montiert oder so ausgestaltet, dass das Bedienpersonal sie für seine Tätigkeit örtlich flexibel benutzen kann, indem sie per Kabel oder drahtlos an das Frachtladesystem angebunden sind.

Das erfindungsgemäße Frachtladesystem weist bevorzugt mindestens eine Bedienkonsole auf, die ein Bedienelement zur Steuerung der Drehung eines Frachtstücks enthält. Bei diesem Bedienelement kann es sich um einen Schalter, einen Taster oder eine sonstige Eingabevorrichtung handeln. Es ist ebenfalls möglich, ein vorhandenes Bedienelement um die Steuerungsfunktion für die Drehung zu erweitern. Somit ist eine einfache Bedienbarkeit des erfindungsgemäßen Frachtladesystems gewährleistet.

Das erfindungsgemäße Frachtladesystem dient hauptsächlich der Verwendung in einem Flugzeug, kann jedoch auch in anderen Transportmitteln wie beispielsweise Zügen oder Schiffen eingesetzt werden. Insbesondere bei Flugzeugen handelt es sich bei den Frachtstücken überwiegend um (genormte) Container oder Paletten.

### Kurze Beschreibung der Zeichnung

Die Erfindung soll anhand eines Ausführungsbeispiels näher erläutert werden. Dabei zeigt:

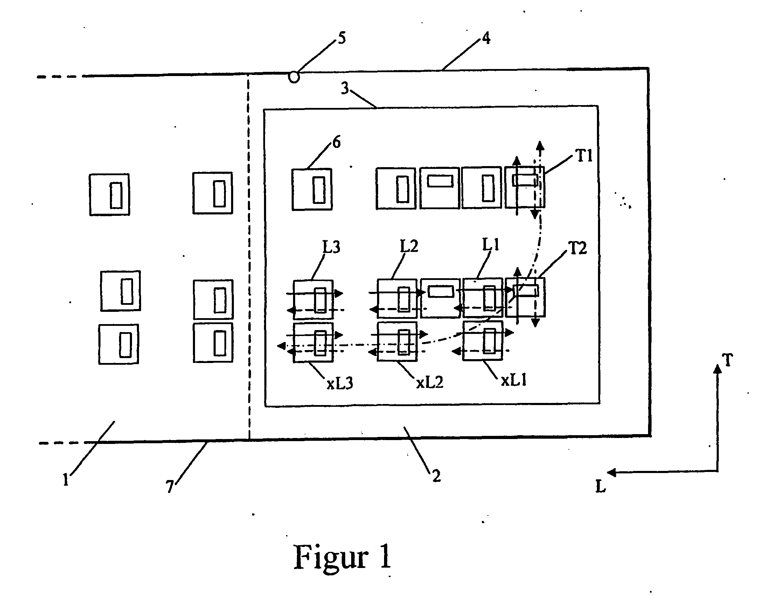

- Figur 1: eine Anordnung von Flurfördermiteln eines Frachtladesystems.

### Wege zur Ausführung der Erfindung

In Figur 1 ist im Grundriss ein Ausschnitt eines Frachtraumes 7 eines Flugzeuges dargestellt. Im Bereich der Frachtraumtür 4 befindet sich der Ladebereich 2, der in einem Abschnitt 3 mit Kugelmatten ausgestattet ist. Derartige Kugelmatten dienen der Aufnahme des Gewichts eines Frachtücks bei gleichzeitiger Manövrierbarkeit und sind dem Fachmann im Zusammenhang mit Frachtladesystemen bekannt. In Bereich 1 werden die Frachtstücke für den Transport deponiert. Exemplarisch sind einige Flurförderelemente 6 dargestellt, die in die Ladefläche eingelassen sind und bei denen es sich bevorzugt um Walzenförderer handelt. Derartige Walzenförderer werden auch als PDU (Power Drive Unit) bezeichnet. Bevorzugt sind die PDUs absenkbar ausgestaltet oder montiert, wodurch inaktive PDUs die gewünschte Bewegung des Frachtstücks nicht hemmen. Im vorliegenden Beispiel sind die vorhandenen PDUs so ausgerichtet, dass ihre Förderrichtungen entlang der Längsachse L oder der Querachse T des Flugzeugs und damit der Ladefläche verlaufen, also senkrecht aufeinander stehen, was der üblichen Konfiguration bei Frachtladesystemen entspricht.

Die Drehung des Frachtstücks erfolgt während des Ein- beziehungsweise Ausfahrens in den beziehungsweise aus dem Ladebereich 2. Eine Drehung außerhalb des Frachtraumes 7 ist normalerweise nicht möglich, da das Frachtstück dann mit seiner Längsseite durch die Frachtraumtür 4 gebracht werden müsste. Dazu wäre eine Frachtraumtür mit einer gewissen Mindestgröße notwendig, die aus technischen Gründen jedoch nicht realisierbar ist. Insbesondere Normcontainer können so lang sein, dass es ebenfalls nicht möglich ist, das Frachtstück mit der Stirnseite durch die Frachtraumtür 4 zu transportieren und es vollständig im Ladebereich 2 zu drehen. Daher befindet sich das Frachtstück bei der Drehung bevorzugt teilweise im Frachtraum 7 und teilweise außerhalb.

Im vorliegenden Beispiel werden die acht PDUs L1, L2, L3, xL1. xL2, xL3, T1 und T2 zur Drehung des Frachtstücks verwendet. Die durchgezogenen Pfeile geben die Förderrichtung der jeweiligen PDU beim Drehen des Frachtstückes aus dem Frachtraum 7 hinaus an, die gestrichelten Pfeile die Förderrichtung beim Drehen des Frachtstückes in den Frachtraum 7 hinein. Durch den strichpunktierten Pfeil wird verdeutlicht, dass die zur Drehung verwendeten PDUs L1, L2, L3, xL1, xL2, xL3, T1 und T2 im Wesentlichen auf einer gekrümmten Bahn angeordnet sind.

Im Folgenden wird das Hineindrehen eines Frachtstücks in den Frachtraum 7 beschrieben. Zunächst wird zumindest ein Teil des Frachtstücks gerade durch die Frachtraumtür 4 in den Ladebereich 2 hineingefahren. Dann wird das Kommando zum Hineindrehen des Frachtstücks gegeben, woraufhin die Steuereinheit, die die Ansteuerung der PDUs übernimmt, die PDUs L1, L2, L3, xL1, xL2, xL3, T1 und T2 aktiviert, wobei diese in Richtung der gestrichelten Pfeile fördern, und die restlichen PDUs 6 deaktiviert. Durch die PDUs L1, L2, L3, xL1, xL2 und xL3 wird das Frachtstück in Figur 1 nach links bewegt, bis es am Anschlagpunkt 5 anliegt und sich durch die Kraft der PDUs und die Gegenkraft am Anschlagpunkt 5 ein Moment ergibt, durch das das Frachtstück im Uhrzeigersinn in den Frachtraum 7 hineingedreht wird. Die Drehung erfolgt um eine Achse, die senkrecht auf der Ebene der Ladefläche steht. Unterstützt wird die Drehbewegung durch die PDUs T1 und T2, was insbesondere bei schweren Frachtstücken und/oder bei nicht völlig waagerecht ausgerichteter Ladefläche von Vorteil ist. Der Transport innerhalb des Bereiches 1 erfolgt mittels dort angeordneter PDUs. Das Hinausdrehen erfolgt analog, wobei die PDUs T1 und T2 maßgeblich das Moment um den Anschlagpunkt 5 erzeugen und von den PDUs L1, L2, L3, xL1, xL2 und xL3 unterstützt werden.

Bei einer im Grunde bekannten Bedienkonsole eines Frachtladesystems kann mittels eines Joysticks das Frachtstück translatorisch bewegt werden. Bei Stellung "IN" bzw. "OUT" wird das Frachtstück entlang der Querachse T durch die Frachtraumtür 4 in den Ladebereich 2 hinein bzw. aus dem Ladebereich 2 hinaus bewegt. Mit den Stellungen "AFT" bzw. "FWD" erfolgt eine Bewegung des Frachtstücks entlang der Längsachse L des Flugzeugs. Bevorzugt weist die Bedienkonsole ein Bedienelement zur Steuerung der Drehung des Frachtstücks auf. In einer Ausführungsform ist dies ein Schalter, der neben einer Mittelstellung die Position "Turn in" zum Drehen des Frachtstücks in den Frachtraum 7 hinein und eine Stellung "Turn out" zum Drehen des Frachtstücks aus dem Frachtraum 7 hinaus aufweist. Bevorzugt weist der Schalter in der Mittelstellung eine Rastposition auf, in die er bei Nichtbetätigung aus den anderen Positionen automatisch zurückkehrt. Alternativ zu einem Schalter kann ein Joystick eingesetzt werden, mit dem sich neben der translatorischen auch die Drehbewegung des Frachtstücks steuern läßt. Dies kann beispielsweise durch Drehung des Schafts des Joysticks um seine Längsachse in bzw. gegen die Uhrzeigerrichtung erfolgen.

Das vorgeschriebene Ausführungsbeispiel ist rein exemplarisch und nicht beschränkend. Neben Walzenförderem können auch andere Flurförderelemente wie beispielsweise Bandförderer eingesetzt werden.

## Patentansprüche

1. Frachtladesystem zum Einbau in ein Flugzeug oder ein anderes Transportfahrzeug mit Flurförderelementen (6), die in der Lage sind, Frachtstücke um eine Achse senkrecht zur Ladefläche (1, 2) zu drehen, aufweisend einen Anschlag (5) und in der Ladefläche (1, 2) angeordnete Flurförderelemente (6) mit fest ausgerichteter bidirektionaler Förderfähigkeit und einer Steuereinrichtung, die zur Drehung der Frachtstücke Flurförderelemente (L1, L2, L3, xL1, xL2, xL3, T1, T2) aktiviert, deren Förderrichtungen senkrecht zueinander stehen und in Längs- und Querrichtung der Ladefläche (1, 2) verlaufen, wobei eine erste Gruppe (T1,T2) der Flurförderelemente auf einer Linie in Querrichtung und eine zweite Gruppe (xL1, xL2, xL3, L1, L2, L3) der Flurförderelemente auf zwei parallelen Linien in Längsrichtung angeordnet ist, **dadurch gekennzeichnet, dass** die Steuereinrichtung dazu eingerichtet ist, die Flurförderelemente der zweiten Gruppe alle in dieselbe Richtung anzutreiben, sodass durch die Kraft der Flurförderelemente ein Moment um den Anschlagpunkt (5) erzeugt wird.

2. Frachtladesystem nach Anspruch 1, **dadurch gekennzeichnet, dass** die Flurförderelemente (6, L1, L2, L3, xL1, xL2, xL3, T1, T2) Walzenförderer sind.

3. Frachtladesystem nach einem der Ansprüche 1 oder 2, **dadurch gekennzeichnet, dass** die zur Drehung verwendeten Flurförderelemente (L1, L2, L3, xL1, xL2, xL3, T1, T2) im Bereich der Frachtraumtür (4) innerhalb des Frachtraumes (7) angeordnet sind.

## Claims

1. Freight loading system for installation in an aircraft or other transport vehicle, having floor conveyor elements (6) which are capable of rotating items of freight about an axis perpendicular to the loading surface (1, 2), having a stop (5) and floor conveyor elements (6) arranged in the loading surface (1, 2) and having a fixedly aligned bidirectional conveying capacity, and a control device which, in order to rotate the items of freight, activates floor conveyor elements (L1, L2, L3, xL1, xL2, xL3, T1, T2), whose conveying directions are perpendicular to one another and run in the longitudinal and transverse direction of the loading surface (1, 2), a first group (T1, T2) of the floor conveyor elements being arranged in a line in the transverse direction and a second group (xL1, xL2, xL3, L1, L2, L3) of the floor conveyor elements being arranged in two parallel lines in the longitudinal direction, **characterized in that** the control device is organized so as to drive all the floor conveyor elements of the second group in the same direction, so that a moment about the stop point (5) is produced by the force of the floor conveyor elements.

2. Freight loading system according to Claim 1, **characterized in that** the floor conveyor elements (6, L1, L2, L3, xL1, xL2, T1, T2) are roll conveyors.

3. Freight loading system according to either of Claims 1 and 2, **characterized in that** the floor conveyor elements (L1, L2, L3, xL1, xL2, T1, T2) are arranged within the freight compartment (7) in the area of the freight compartment door (4).

## Revendications

1. Système de chargement de fret destiné à être incorporé dans un aéronef ou dans un autre véhicule de transport avec des éléments de manutention (6) qui sont en mesure de faire tourner des marchandises de fret autour d'un axe perpendiculairement à la surface de chargement (1, 2), présentant une butée (5) et des éléments de manutention (6) disposés dans la surface de chargement (1, 2), avec une capacité de transport bidirectionnelle orientée fixement et un dispositif de commande, qui active les éléments de manutention (L1, L2, L3, xL1, xL2, xL3, T1, T2) pour faire tourner les marchandises de fret, dont les directions de transport sont orientées perpendiculairement les unes aux autres et s'étendent dans la direction longitudinale et transversale de la surface de chargement (1, 2), un premier groupe (T1, T2) des éléments de manutention étant disposé sur une ligne dans la direction transversale et un deuxième groupe (xL1, xL2, xL3, L1, L2, L3) des éléments de manutention étant disposé sur deux lignes parallèles dans la direction longitudinale, **caractérisé en ce que** le dispositif de commande est prévu pour entraîner tous les éléments de manutention du deuxième groupe dans la même direction, de sorte que par la force des éléments de manutention, une coupe soit produit autour du point de butée (5).

2. Système de chargement de fret selon la revendication 1, **caractérisé en ce que** les éléments de manutention (6, L1, L2, L3, xL1, xL2, xL3, T1, T2) sont des transporteurs à rouleaux.

3. Système de chargement de fret selon l'une quelconque des revendications 1 ou 2, **caractérisé en ce que** les éléments de manutention (L1, L2, L3, xL1, xL2, xL3, T1, T2) utilisés pour la rotation sont disposés dans la région de la porte de l'espace de fret (4) à l'intérieur de l'espace de fret (7).
